(19) Europäisches Patentamt / European Patent Office / Office européen des brevets

(11) **EP 1 942 321 A1**

(12) **EUROPEAN PATENT APPLICATION**

(43) Date of publication:
**09.07.2008 Bulletin 2008/28**

(51) Int Cl.:
*G01J 3/02* *(2006.01)*          *G01J 3/12* *(2006.01)*
*G02B 6/02* *(2006.01)*

(21) Application number: **07388001.5**

(22) Date of filing: **03.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Danmarks Tekniske Universitet 2800 Lyngby (DK)**

(72) Inventor: **Alkeskjold, Thomas Tanggaard 4040 Jyllinge (DK)**

(74) Representative: **Jensen, Peter Kim et al c/o Chas. Hude H.C. Andersens Boulevard 33 1780 Copenhagen V (DK)**

(54) **A spectrometer with a plurality of light guides having a bandpass transmission spectrum**

(57)    A spectrometer comprising a plurality of light guides (21). The light guides (21) are oriented substantially in a longitudinal direction, each having a first end (23) for coupling in light and a second end (24) for coupling out light. The light guides (21) are arranged with a mutual distance in a transverse plane. The individual light guides (21) have a transmission spectrum comprising at least a first bandpass region (11), where at least a number of the individual first bandpass regions are different. Additionally, the spectrometer comprises a plurality of detectors (26), which are arranged so as to detect light coupled out of the second end (24) of the light guides (21).

**Fig. 6**

**Description**

The present invention relates to a spectrometer and a device for analysing the spectral composition of light.

Most of the commercially available spectrometer products or optical spectrum analysers utilise diffraction gratings in order to measure the spectral composition of light. The light, which is to be analysed, is sent into the spectrometer and is diffracted by a diffraction grating. The diffracted light is sent to a detector array, where the individual detectors each measure a given wavelength range of the total spectrum.

This method is relatively expensive with respect to material cost, mounting and alignment. Furthermore, the resolution of such systems is dependent on the size of the spectrometer, since the measured wavelength range for each detector will become narrower with increasing distance between the diffraction grating and the detector array. Therefore, such systems tend to be bulky and thus applicable only in laboratories.

US 2005/0169590 discloses an optical fibre, which comprises a core region and a microstructured cladding region surrounding the core region. The cladding region includes a number of cladding elements or air holes, said cladding elements being arranged in a two-dimensional periodic manner or a Bragg-type of manner. At least a number of the cladding elements are filled in at least one longitudinally extending section of the optical fibre with a liquid crystal material. This section exhibits a photonic bandgap effect for at least one phase state of the liquid crystal.

The purpose of the present invention is to provide a spectrometer, which is compact and has a relatively high spectral resolution.

This is according to the invention obtained by a spectrometer comprising a plurality of light guides, the light guides being oriented substantially in a longitudinal direction, each having a first end for coupling in light and a second end for coupling out light, the light guides being arranged with a mutual distance in a transverse plane, wherein the individual light guides have a transmission spectrum comprising at least a first bandpass region, at least a number of the first bandpass regions of the individual light guides being different, and a plurality of detectors, which are arranged so as to detect light coupled out of the second end of the light guides.

Thereby, a simple, compact and inexpensive spectrometer is provided. The resolution of the spectrometer at least corresponds to the width of the bandpass regions or the width of the narrowest features in the bandpass regions. If the individual transmission spectrums of the light guides comprise a number of bandpass regions, the resolution of the spectrometer usually corresponds to the width of the narrowest bandpass region. In other words, the highest frequency component contained in the Fourier transform of the bandpass filter function determines the resolution of the spectrometer. It is essential that the Fourier transformation is as wide as possible in order to obtain the highest spectral resolution.

Preferably, a total wavelength range for the spectrometer covers wavelengths from 100 nm to 3000 nm, or 300 nm to 3000 nm. Alternatively, the total wavelength range covers IR-light and/or visible light and/or UV-light. According to a preferred embodiment, the total wavelength range covers at least the spectrum for visible light, for instance if the spectrometer is used for colour measurements or analysis.

According to a particularly preferred embodiment, the bandpass regions of the individual light guides combined cover the total wavelength range for the spectrometer. This can for instance be achieved by the bandpass regions of the individual light guides being mutually adjacent or partially overlapping. The resolution of the spectrometer corresponds to the total wavelength range divided by the number of light guides.

In a preferred embodiment according to the invention, the light guides are photonic bandgap waveguides. Thus, a simple solution for providing the individual bandpass regions is obtained.

In one embodiment according to the invention, the light guides are formed by a bundle of photonic bandgap fibres.

In another embodiment according to the invention, the light guides are formed by fibres with microstructures, each comprising: a core region, a cladding region surrounding said core region, and a number of substantially longitudinally oriented cladding elements, such as longitudinally extending holes, located in the cladding region.

The light guides with microstructures can for instance be formed by the aforementioned bundle of photonic bandgap fibres or crystal fibres, or can be formed as a single fibre having a plurality of core and matching cladding elements.

According to a particular embodiment, the cladding elements of the individual light guides are cross-sectionally arranged in a substantially ring shaped or substantially periodic pattern, such as a honeycomb, triangular or hexagonal structure. Preferably, the cladding elements form 3-7 rings, which yield sufficient sharp bandgap structures. The core regions are usually formed by removing one of the central cladding elements and making the core solid. According to a preferred embodiment, also one or more of the inner rings are instead part of the core region. Thereby, the cross section of the core region is larger and more light can be coupled into the light guide, thus forming a multimode light guide.

In a preferred embodiment of the spectrometer according to the invention, the light guides are arranged in a substantially quadrilateral array. Alternatively, the light guides can be arranged randomly or in a triangular pattern. However, the quadrilateral or triangular arrangements are particular suited for a simple stacking of the fibres and coupling light in and out of the fibres.

According to one aspect of the invention, the light guides are separated by a number of beam dumps. The beam dumps are to be understood as optical elements having poor optical transmission characteristics. The beam dumps are used to reduce the coupling between the multiple core regions. The beam dumps can for instance be a material with a low refractive index, such as silica doped with fluorine, or a material with high optical loss.

In a preferred embodiment according to the invention, the spectrometer further comprises a plurality of focusing lenses for coupling light into the first end of the light guides. The lenses are preferably arranged in the focal distance from the first end of the light guides. By using the lens array, the light can be coupled more efficiently into the light guides. Preferably, the focal length of the lenses lies within the numerical aperture of the light guides.

According to a particular embodiment, the lenses are arranged in a quadrilateral array. Such lens arrays are commercially available at affordable prices.

Preferably, the arrangement of the lens array corresponds to the arrangement of the light guides. Thus, the lens array can also be arranged in a triangular array. However, the arrangement of the lens array does not necessarily have to correspond to the arrangement of the light guides. However, the spatial resolution of the detector array should then be higher than that of the light guide.

In a particular embodiment of the invention, the spectrometer comprises an opaque screen arranged at the first end of the light guides and having a plurality of pinholes, preferably being arranged in a quadrilateral or triangular array. The pinholes provide a simple solution for coupling light into the core of the light guides, and the arrangement of the pinholes should correspond to the arrangement of the light guides. The pinhole arrangement can also be used in addition to the lens array.

Additionally, the spectrometer may comprise an opaque screen arranged at the second end of the light guides and having a plurality of pinholes, preferably being arranged in a quadrilateral or triangular array. Thus, the pinholes are used for spatially filtering the coupled out light and provide a simple solution for ensuring that no cross-correlation occurs between light coupled out of the respective light guides. Again, the arrangement of the pinholes should correspond to the arrangement of the light guides. This arrangement can also be combined with a lens array.

According to a preferred embodiment of the invention, the plurality of detectors is arranged in a detector array, such as a CCD-array or a CMOS-array. CCD-arrays and CMOS-arrays are commercially available at affordable prices. In fact, cheap web-cams, often utilising CMOS-arrays, will be sufficient for the spectrometer to operate efficiently. The overall cost of the spectrometer can thereby be kept very low compared to commercial spectrometers using grating technology.

According to a particular embodiment of the invention, the transmission spectra of the individual light guides comprise a number of bandpass regions. Preferably, the bandpass regions of the individual transmission spectra have a non-periodic distribution as function of wavelength. The distribution preferably contains narrow spectral features, e.g. with widths of 5 to 15 nm, preferably around 10 nm. The transmission spectrum should contain these narrow spectral features so that the Fourier transformation of the spectrum has a width that corresponds to the desired resolution of the spectrometer.

Thereby, it is ensured that the individual bandpass regions of some of the individual light guides, which can be made mutually shifted during the fabrication of the light guides, do not unintentionally fully overlap as would be the case, if the bandpass regions had a periodical distribution. Thus, it is ensured that the resolution of the spectrometer is kept high. As previously mentioned, the Fourier transformation of the spectra should be as wide as possible in order to obtain a high spectral resolution.

According to a preferred embodiment, a number of the cladding elements at least along a longitudinal part of said fibre are filled with or consist of a filling material exhibiting anisotropic optical properties. The filling material may for instance be a liquid crystal material. Thereby, it is ensured that the bandpass spectra of the transmission spectrums of the individual light guides have a non-periodic spectral distribution. In another embodiment according to the invention, the filling material is an isotropic material.

Alternatively, the non-periodic distribution can be achieved by designing the fibre so that it contains narrow spectral features, for instance narrow bandpass regions or notch filter, thereby ensuring that the Fourier transformation of the transmission function is wide. This can be achieved by introducing "defects" in the lattice structure of the cladding elements, e.g. by making the sizes 1-3 of the cladding elements around the core region different from the other cladding elements. This is described in greater detail in European patent application EP 05388110.8 by the same applicant.

According to a particular embodiment of the spectrometer, the longitudinal length of the light guides is between 0.5cm and 3cm, or between 1 cm and 2cm. Preferably, the light guides are as short as possible in order to keep the spectrometer as compact as possible. However, the light guides need to have a certain length in order to efficiently attenuate those wavelengths, which lie outside the bandpass regions of the individual light guides, thereby ensuring a high resolution for the spectrometer.

Additionally, the spectrometer may comprise one or more diffractive optical elements arranged at the second end of the light guides. The diffractive optical element(s) (DOE) can be used for focusing the light coupled out of the light guides by implementing lens effects in the DOE(s). Alternatively, the DOE(s) can be a simple grating, which is used to diffract the individual bandpass spectra from a single light guide onto different detectors. Thereby, fewer light guides can be used in order to obtain the desired resolution.

Preferably, the spectrometer additionally comprises a data processing unit. The data processing unit can for instance be a computer or a microprocessor or any digital signal processing unit.

In general, provided that the desired resolution of the spectrometer is achieved by dividing the total wavelength range of the spectrometer into N regions, the spectrometer should comprise at least N detectors and preferably also at least N light guides. The data processing unit should thus be able to solve at least N equations having N variables in order to evaluate the spectral distribution of the light collected by the light guides based on the signals from the different detectors. This is performed using conventional numerical methods.

The calculations can also be divided into a number of sub ranges of the total wavelength range. If for instance dividing the total wavelength range into two ranges, it would suffice to solve two sets of N/2 equations having N/2 variables. This can reduce the computational complexity of the data processing.

In a particular embodiment of the invention, the spectrometer comprises one or more external light sources emitting light covering the total wavelength range. The light source can for instance be a white light source. An external light source can be necessary in order to make an efficient spectral measurement, e.g. for label detection, identification of surface colours etc.

According to one embodiment of the invention, the spectrometer comprises a lowpass filter, such as a UV-filter. Alternatively or in addition thereto, the spectrometer comprises a highpass filter, such as an IR-filter. The highpass filter and/or the lowpass filter are used for removing undesired wavelengths from the light transmitted to the detectors, thereby removing wavelengths that could interfere with the measurements. The filters can be positioned either at the first end or the second end of the light guides.

According to a particular embodiment of the spectrometer, the light guides are tapered in the longitudinal direction. Thereby, the bandpass spectra can have a Gaussian shape, which can be applicable in many situations.

The spectrometer preferably comprises 50-500 light guides or 100-200 light guides, for instance arranged in a 10x10 array. The transmission spectra of the individual light guides can comprise several narrow bandpass regions, thereby increasing the overall resolution of the spectrometer.

Preferably, the N fibres have N different transmission spectra with individual non-periodically distributed bandpass regions. These regions can be mutually wavelength shifted.

The spectrometer fibre can for example be manufactured by using a microstructured fibre preform (the mother preform) consisting of a stacking of N smaller but identical preforms (N child preforms). The air holes of each of the N child preforms are then pressurised individually, so that the air holes of a first child preform is pressurised with pressure P1, air holes of a second child preform s pressurized with pressure P2 and so forth; P1, P2 ...Pn being different. The mother preform is then pulled to a single fibre using conventional fibre drawing techniques.

The different pressures between the child preforms produces a single fibre consisting of N individual fibres all having different hole diameters and thereby different spectral transmission properties, if the holes are infiltrated with a material having a higher refractive index than that of the fibre material.

The invention is explained in greater detail below with reference to the accompanying drawings, in which

Fig. 1a shows an example of a transmission spectrum for a microstructured optical fibre,

Fig. 1b shows a number of transmission spectra for individual optical fibres, the spectra being mutually wavelength shifted,

Fig. 2 a first fibre bundle for use in the optical spectrum analyser according to the invention,

Fig. 3 a second fibre bundle for use in the optical spectrum analyser according to the invention,

Fig. 4 a first optical fibre comprising a number of inherent light guides for use in the optical spectrum analyser according to the invention,

Fig. 5 a second optical fibre comprising a number of inherent light guides for use in the optical spectrum analyser according to the invention,

Fig. 6 a schematic view of a first embodiment of the spectrometer according to the invention,

Fig. 7 a schematic view of a second embodiment of the spectrometer according to the invention,

Fig. 8 a schematic view of a third embodiment of the spectrometer according to the invention,

Fig. 9 a schematic view of a fourth embodiment of the spectrometer according to the invention, and

Fig. 10 a simulated spectrum measured with the spectrometer according to the invention.

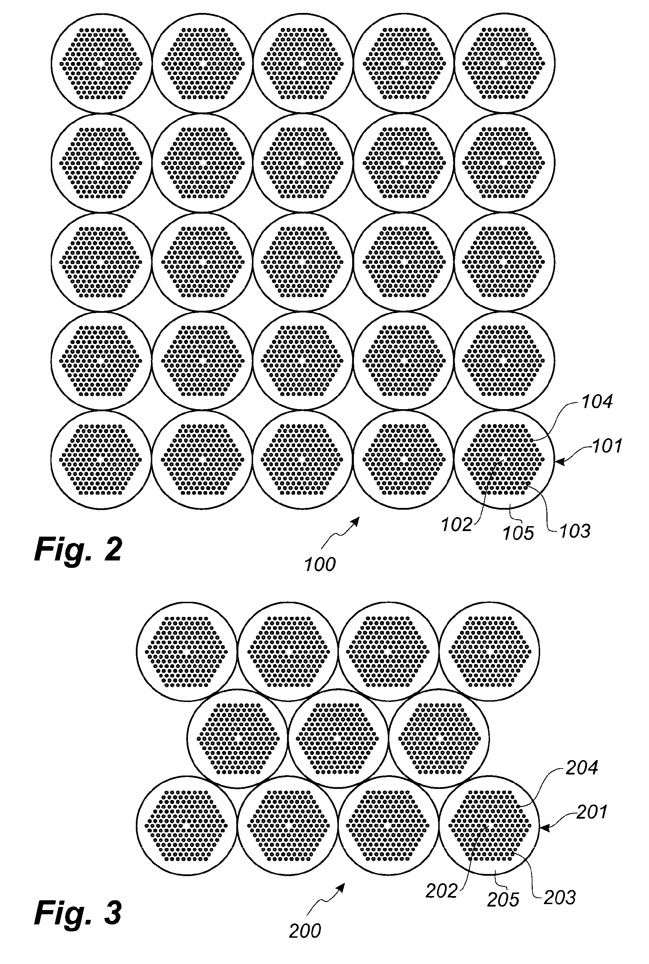

Fig. 2 schematically depicts the cross-section of a fibre bundle 100 comprising 25 individual fibres arranged in a 5 by 5 quadrilateral array. The optical fibres are of the photonic bandgap fibre type. Each of the optical fibres 101 comprises a core region 102 and a micro-structured cladding region surrounding said core region 102. The micro-structured cladding region comprises a number of cladding elements 104, for instance in form of a number of axially or longitudinally extending holes or high index rods. The cladding elements are here of equal dimension or diameter, but defects to the lattice structure of the hole can be introduced. The cladding elements 104 are placed in a background cladding material 103 and an over-cladding region 055. The cladding elements 104 surrounding the core region 102 are positioned in a two-dimensional periodic lattice or a so-called triangular structure. The core region 102 is preferably made from the same or a similar material as the background cladding material 103, for instance by removing one or more of the cladding elements 104 in the centre of the cross-section of the fibre 101. The fibre 101 uses the photonic bandgap effect for light propagation in the longitudinal direction of the core 102 of the fibre 101. This means that the fibre 101 can guide light with wavelengths within different bands, which among others are determined by the structure and material contents of the cladding elements 104. The refractive index of the material in said cladding elements 104 is higher than the refractive index of the background cladding material 103.

A configuration with a triangular pattern with seven "rings" as shown in Fig. 2 has shown a good photonic bandgap effect with a sharp bandgap edge. However, it is possible to design the individual fibres 101 with fewer or additional rings. Also one or more of the inner rings of cladding elements 104 may be removed in order to provide a larger core region 102, so that more light can be coupled into the individual fibres.

Such a fibre 101 has a transmission spectrum with a number of transmission bands with high transmission separated by bands with low or no transmission. Among others, the transmission spectrum is determined by material contained or filled in said cladding elements 104. This can for instance be a liquid crystal such as E7 liquid crystal from Merck, Darmstadt, Germany.

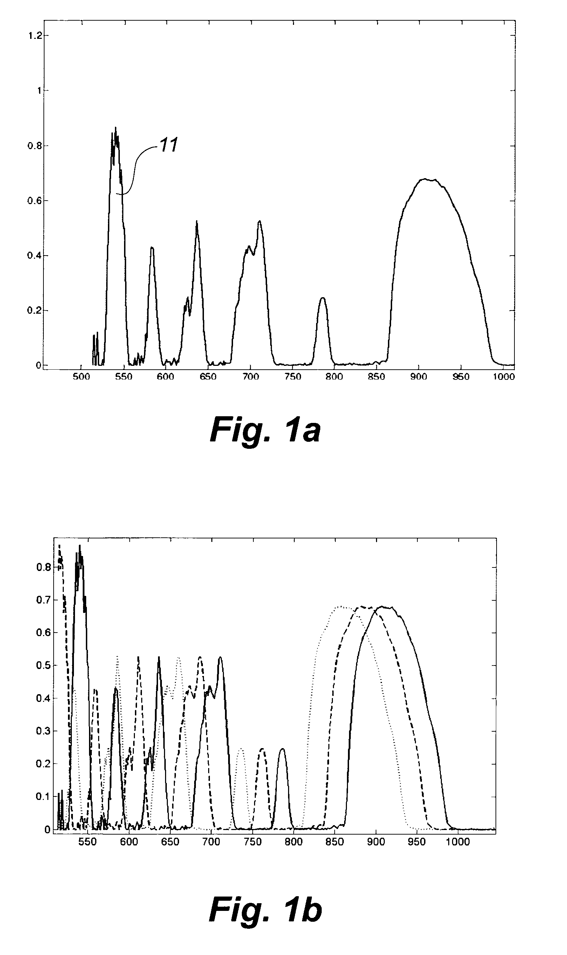

A unique property of such fibres is that the transmission spectrum covers a wide spectral range without having a periodic distribution of the bandpass regions contained in the transmission spectrum. An example of such a transmission spectrum is shown in Fig. 1a. The transmission spectrum exhibits a number of narrow bandpass regions, which have a non-periodic distribution. These bandgap regions can be used to analyse the spectral composition of light sent through the fibre bundle 100. The Fourier transformation of the transmission spectrum shows that the theoretical resolution of the shown spectrum is approximately 10 nm. If using N fibres or light guides having combined N different bandpass regions, it is possible to cover a wide spectral range and to analyse the spectral contents of light sent through the fibre bundle 100. A fibre with the shown transmission spectrum can for instance be used to examine, if the light to be analysed contains wavelengths between 538 nm and 548 nm using the bandpass region 11 of the fibre.

In general, the resolution of a spectrometer utilising N such fibres corresponds to the narrowest bandpass region 11 (or notch feature) of the individual transmission spectra. Preferably, the N fibres have N different transmission spectra with individual non-periodically distributed bandpass regions. These regions should be mutually wavelength shifted, i.e. so that the bandpass region 11 of a first fibre has the transmission spectrum shown in Fig. 1a and that a corresponding bandpass region of a second fibre is wavelength shifted with respect to the shown transmission spectrum. This principle is illustrated in Fig. 1b showing the transmission spectra for three individual fibres. Therefore, it is important that the transmission spectra of the individual fibres do not exhibit a periodic distribution, since the mutually shifted transmission spectra thereby could fully overlap, which would reduce the resolution of the spectrometer.

If the bandpass regions of the individual fibres are partially overlapping, it is possible to increase the resolution of the spectrometer, thereby making the resolution higher than that of the narrowest bandgap region. The resolution of the spectrometer roughly corresponds to the total wavelength range of the spectrometer divided by the total number N of bandpass regions used to analyse the spectral composition of light.

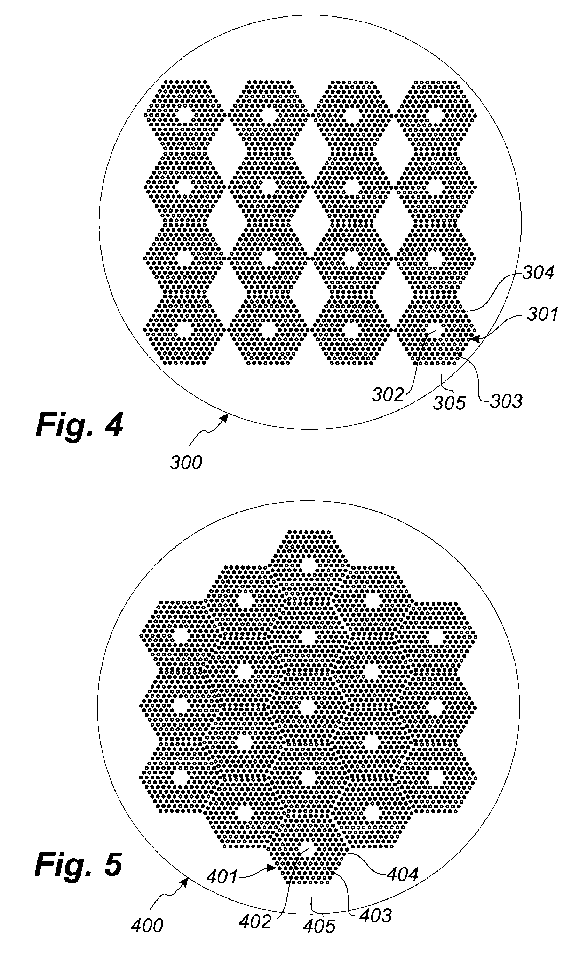

The fibres can for example be manufactured by using a microstructured fibre preform (the mother preform) consisting of a stacking of N smaller but identical preforms (child preforms). The air holes of each of the N child preforms are then pressurised individually, so that the air holes of a first child preform are pressurised with pressure P1, air holes of a second child preform are pressurized with pressure P2 and so forth; P1, P2 ...Pn being different. The mother preform is then pulled to a single fibre using conventional fibre drawing techniques. Examples of such fibres are shown schematically in Fig. 4 and Fig. 5.

The different pressures between the child preforms produce a single fibre consisting of N individual fibres all having slightly different hole diameters and thereby different spectral transmission properties, if the holes are infiltrated with a material having a higher refractive index than that of the fibre material. Using this production method, it is ensured that the individual transmission spectra of the fibres are mutually wavelength shifted.

If light to be analysed is sent through a number fibres having individually wavelength shifted transmission spectra as shown in Fig. 1 and the resulting effect is measured with for instance a photo detector, the effect can be expressed using a discrete equation system.

$$P_x = \sum_{i=1}^{N} S_i * T_i \, ,$$

Where $P$ is the optical effect, $S$ is the effect spectrum of the input light, and $T$ is the transmission function.

By performing N measurements of $P$ using the N different bandpass regions ($T$), it is possible to evaluate the spectral composition, i.e. $S$, with a resolution or dynamic range corresponding to the number of individual bandpass regions N. This is performed by solving the linear equation system

$$\underline{\underline{T}} \cdot \underline{S} = \underline{P} \, ,$$

Where $\underline{\underline{T}}$ is an NxN matrix, which defines the N transmission spectra, $\underline{S}$ is an N-length vector, which defines the input spectrum, and $\underline{P}$ is an N-length vector, which defines the optical effect measured for the wavelengths of the N bandpass regions.

Fig. 3, 4, and 5 show schematic views of alternative embodiments for the light guides of the spectrometer, in which like numerals refer to similar parts shown in Fig. 1. Therefore, only the difference between the embodiments is described.

The fibre bundle can for instance be configured as shown in Fig. 3, where the individual fibres are stacked in a triangular pattern.

Alternatively, the individual fibres can as already mentioned be drawn to a single fibre, i.e. being inherent in one larger fibre as shown in Fig. 4 or 5. The resulting fibres 300, 400 have a number of core regions, each displaying different bandpass regions for transmission of light in the longitudinal direction of the cores. The individual fibres can for instance have a quadrilateral arrangement as shown in Fig. 4 or a triangular pattern as shown in Fig. 5.

The individual fibres are preferably separated by so-called beam dumps. The beam dumps are optical elements having poor optical transmission characteristics. The beam dumps are used to reduce or remove coupling between the multiple core regions or individual fibres of a fibre bundle. The beam dumps can for instance be a material with a low refractive index, such as silica doped with fluorine, or a high loss material.

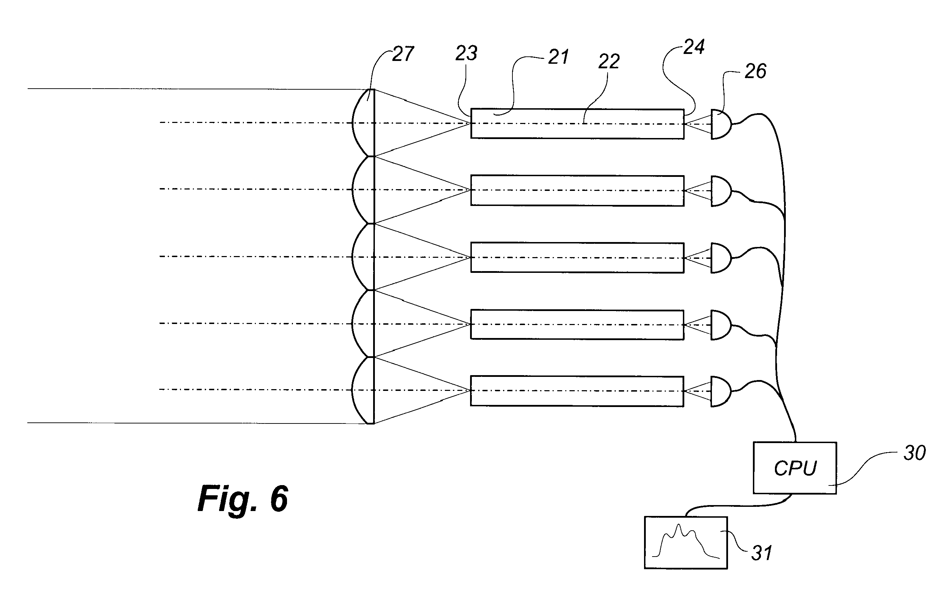

Fig. 6 shows a schematic view of a first embodiment of an optical spectrum analyser or spectrometer according to the invention. The embodiment is depicted seen from the side, thereby only showing light guides arranged in one dimension. However, it should be noted that the light guides can be arranged in a two-dimensional array in the transverse plane, for instance as shown in Figs. 2-5, and that the shown embodiment only is one example of how to implement the invention.

The embodiment shown in Fig. 6 comprises a number of substantially parallel light guides or fibres 21, which extend along a longitudinal axis 22. The spectrometer additionally comprises a lens array 27. The lens array 27 is here depicted as a number of plano-convex condensing lenses. However, it is clear to a person skilled in the art that any focusing lens can be used. Alternatively, integrated optics, such as diffractive optical elements, can be used for focusing the light.

The light to be analysed for spectral composition is sent to the lens array 27, and the light is focused onto a first end 23 of each of the individual fibres 21. The light propagates through the fibres 21 along the longitudinal axis and is emitted from a second end 24 of the individual fibres. The light emitted from the second end 24 of the fibres 21 is collected by a number of detectors 26. The detectors 26 can for instance be a number of individual photo diodes. However, since the fibres 21 usually are arranged in an array in the transverse plane, the detectors 26 are preferably part of a detector array, such as a CCD-array or a CMOS-array, which are commercially available at affordable prices.

The detected signals are sent to a processing unit 30, which analyses the spectral composition of the light by solving the aforementioned linear equation system. The spectral composition can for instance be viewed on a monitor 31.

The individual fibres 21 and the corresponding detectors 26 are each used for measuring an individual spectral part of the total covered spectrum of the spectrometer. This spectral part corresponds to the utilised bandpass region 11 of the transmission spectra of the particular fibre 21.

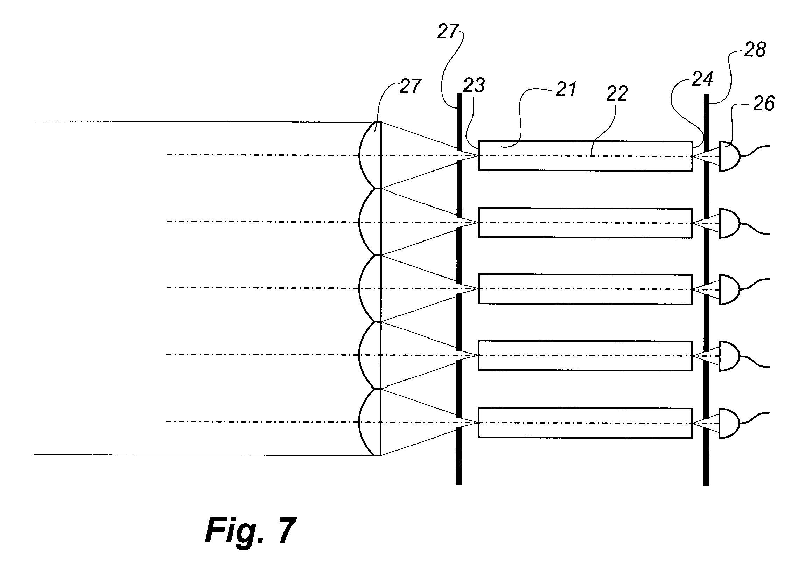

As shown in Fig. 7, the spectrometer can additionally comprise a first opaque screen 27 disposed at the first end 23 of the fibres 21. The opaque screen 27 has a number of pinholes, thereby ensuring that light is only coupled into the core region of each fibre.

In situations, where there is sufficient light for the spectrometer to function properly, the lens array 27 may be omitted. However, it is preferred to use the lens array 27 in order to couple as much light as possible into the individual fibres 21. A second opaque screen 28 including a number of pinholes can be disposed at the second end 24 of the fibres. The opaque screen 28 and the pinholes can be used to ensure that no cross-correlation occurs between the individual detectors, i.e. that light from one fibre 21 is sent only to the corresponding detector 26.

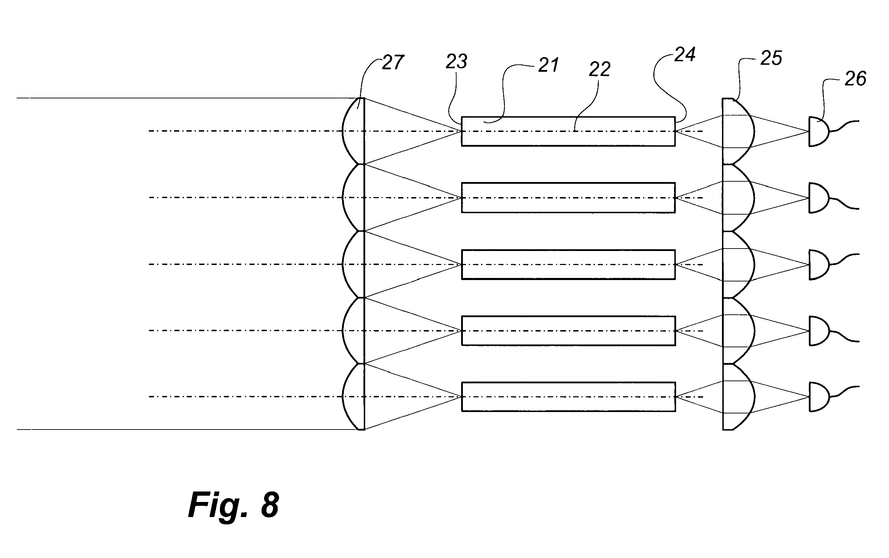

As shown in Fig. 8, the spectrometer may additionally comprise a second lens array 25 disposed at the second end 24 of the fibres 21. The second lens array 25 collects the light emitted from the second end 24 of the fibres 21 and focuses the light onto the detectors of the detector array 26. This embodiment can also be combined with the second opaque screen 28 with the pinholes, preferably disposed in front of the detector array 26 in order to minimise cross-correlation.

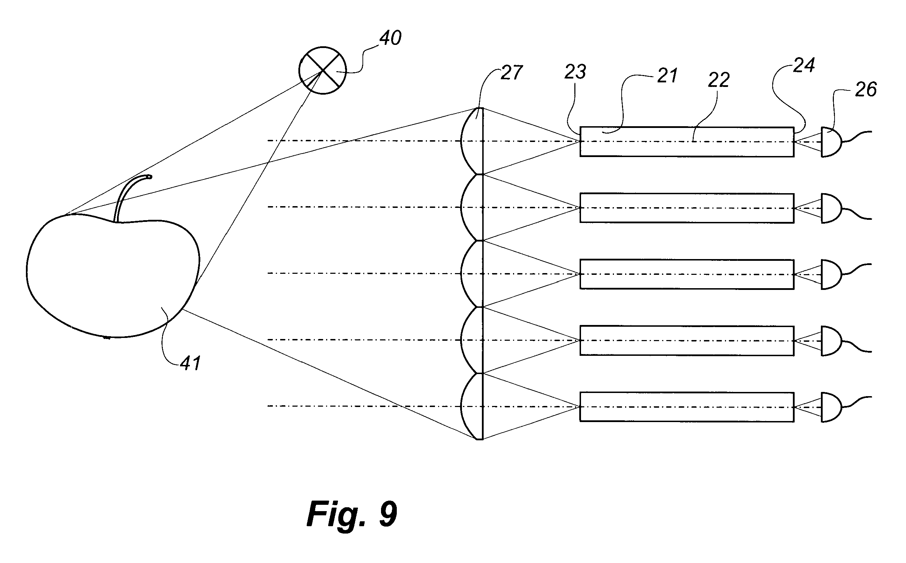

In situations, where lighting is insufficient, it may be necessary to use an external light source 40 to illuminate an object 41 as shown in Fig. 9. This will for instance be necessary for colour verification or analysis of objects or for spectroscopy, where a fluid sample is screened. The external light source 40 is preferably a white light source having a wide spectral range with a near uniform effect spectrum. The external light source 40 of course has to be adapted to the total wavelength range of the spectrometer and can in some circumstances consist of more than one light source, e.g. a white light source and/or a UV-light source and/or an IR-light source. It is also clear that the spectrometer can be calibrated for use with the external light source 41, thereby taking variations in the effect spectrum of the light source(s) into account.

If the spectrometer for instance is to be used for measuring the spectral composition of visible light only, it can be advantageous to include an IR-filter and/or a UV-filter in the spectrometer. This or these filters may be arranged in front of the detector array 26.

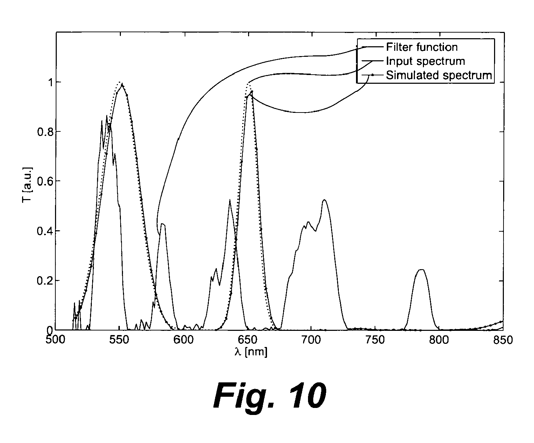

Fig. 10 shows a simulation of the spectrometer according to the invention. The N fibres each have a transmission spectrum according to the shown filter function, the individual spectra being mutually wavelength shifted as illustrated in Fig. 1b. Light having a spectral composition as shown with the input spectrum is coupled into the spectrometer and analysed utilising the spectrometer. The simulated or measured spectrum shows an excellent correlation with the input spectrum.

The fibres or light guides need to have a certain longitudinal extent in order to attenuate those wavelengths, which lie outside the bandpass regions of the individual light guides, thereby ensuring a high resolution for the spectrometer. A length of 1 cm for the photonic bandgap fibres has been shown to be sufficiently efficient.

The term "longitudinal" with respect to the fibres of the spectrometer refers to the propagation direction of the light. For instance, it can be contemplated, that the fibres are bent or curved, or that the propagation direction of the light is angled via a reflecting surface.

In practice, it can be difficult to design the bandpass regions of the individual fibres very accurately. Therefore, the spectrometer should be calibrated before use. This calibration can be performed by using a white light source and using a monochromator for scanning the wavelengths of the entire intended wavelength range of the spectrometer, in the process observing the detector response from the individual sets of fibres and corresponding detectors.

The resolution of the spectrometer depends on the number of fibres or light guides used and on the width of the individual bandgap regions. Spectrometers comprising 100-400 fibres, e.g. arranged in a 10x10 or 20x20 matrix, show promising results. If the total desired wavelength range is very wide, it can be advantageous to include even more fibres. Since detector arrays typically comprise more than 400 detectors, several detectors can be used to detect the light emitted from the individual fibres.

The fibre can be fabricated at relatively low cost. Additionally, lens arrays, UV-filters, IR-filters, and detector arrays are commercially available at affordable prices. The entire spectrometer can thus be mass produced with the price per piece being tens of US dollars. Furthermore, since the fibres only need to have a length of approximately 1 cm, the spectrometer can be very compact. The spectrometer according to the invention thus provides a good trade-off between size, resolution, and cost.

The spectrometer according to the invention has many applications. In the pharmaceutical industry, the spectrometer can for instance be used for clinical analysis, drug test or medical analysis. In the consumer industry, the spectrometer can for instance be used for analysis of cosmetics or quality inspection of foodstuffs, such as analysis of plants, water, beverages, fruit, meat and so forth. The spectrometer can also be used for adjustment of illumination, such at quality or colour calibration of light sources. It is also applicable for colour verification purposes. Furthermore, due to the compact size of the spectrometer, it can be contemplated that the spectrometer can be used for white balancing of cameras. The spectrometer can thus be part of SLR cameras or digital cameras. The list of applicable fields is nearly endless.

Due to the compact size of the spectrometer, it is especially suitable for in situ measurements "in the field", where it is unhandy to bring the commercially available spectrometers, which are bulky and expensive.

The invention has been described with reference to a preferred embodiment. However, the scope of the invention is not limited to the illustrated embodiment, and alterations and modifications can be carried out without deviating from said scope of the invention.

<u>List of reference numerals</u>

| | |
|---|---|
| 11 | bandpass region |
| 21 | light guide / fibre |
| 22 | longitudinal axis |
| 23 | first end |
| 24 | second end |
| 25 | second lens array |
| 26 | detector |
| 27 | first lens array |
| 28 | first opaque screen |
| 29 | second opaque screen |
| 30 | processing unit |
| 31 | monitor |
| 40 | external light source |
| 41 | object |
| 100, 200, 300, 400 | fibre bundle |
| 101, 201, 301, 401 | individual fibres |
| 102, 202, 302, 402 | core region |
| 103, 203, 303, 403 | background cladding material |
| 104, 204, 304, 404 | cladding elements |
| 105, 205, 305, 405 | over-cladding region |

**Claims**

1. A spectrometer comprising:

    - a plurality of light guides (21),
    - the light guides (21) being oriented substantially in a longitudinal direction, each having a first end (23) for coupling in light and a second end (24) for coupling out light,
    - the light guides (21) being arranged with a mutual distance in a transverse plane, wherein
    - the individual light guides (21) have a transmission spectrum comprising at least a first bandpass region (11), at least a number of the first bandpass regions of the individual light guides being different, and
    - a plurality of detectors (26), which are arranged so as to detect light coupled out of the second end (24) of the light guides (21).

2. A spectrometer according to claim 1, wherein a total wavelength range for the spectrometer covers wavelengths from 100 nm to 3000 nm, or 300 nm to 3000 nm.

3. A spectrometer according to claim 2, wherein the bandpass regions of the individual light guides (21) combined cover the total wavelength range for the spectrometer.

4. A spectrometer according to any of the preceding claims, wherein the transmission spectra of the individual light guides comprise a number of bandpass regions.

5. A spectrometer according to claim 4, wherein the number of bandpass regions of the individual transmission spectra have a non-periodic distribution.

6. A spectrometer according to any of the preceding claims, wherein the light guides (21) are photonic bandgap waveguides.

7. A spectrometer according to claim 6, wherein the light guides are formed by a bundle of photonic bandgap fibres (101, 201, 301, 401).

8. A spectrometer according to claim 6 or 7, wherein the light guides are formed by fibres (101, 201, 301, 401) with microstructures, each comprising:

    - a core region (102, 202, 302, 402),
    - a cladding region, surrounding said core region (102, 202, 302, 402), and
    - a number of substantially longitudinally oriented cladding elements (104, 204, 304, 404), such as longitudinally extending holes or high index rods, located in the cladding region.

9. A spectrometer according to claim 8, wherein the cladding elements (104, 204, 304, 404) of the individual light guides are cross-sectionally arranged in a substantially ring shaped or substantially periodic pattern, such as a honeycomb, triangular or hexagonal structure.

10. A spectrometer according to any of the preceding claims, wherein the light guides are arranged in a substantially quadrilateral or triangular array.

11. A spectrometer according to any of the preceding claims, wherein light guides are separated by a number of beam dumps.

12. A spectrometer according to any of the preceding claims, wherein the spectrometer further comprises a plurality of focusing lenses (27) for coupling light into the first end of the light guides, the lenses preferably being arranged in a quadrilateral or triangular array.

13. A spectrometer according to any of the preceding claims, further comprising one or more opaque screens (27, 28) arranged at the first end (23) and/or the second end (24) of the light guides (21) and having a plurality of pinholes, preferably being arranged in a quadrilateral or triangular array.

14. A spectrometer according to any of the preceding claims, wherein the plurality of detectors are arranged in a detector array, such as a CCD-array or a CMOS-array.

15. A spectrometer according to claim 8 or claim 8 together with any of claims 9-14, wherein a number of the cladding elements at least along a longitudinal part of said fibre are filled with or consist of a filling material exhibiting anisotropic optical properties.

16. A spectrometer according to claim 15, wherein the filling material is a liquid crystal material.

17. A spectrometer according to any of the preceding claims, wherein the longitudinal length of the light guides is between 0.5cm and 3cm, or between 1cm and 2cm.

18. A spectrometer according to any of the preceding claims, further comprising one or more diffractive optical elements arranged at the second end of the light guides.

19. A spectrometer according to any of the preceding claims, further comprising one or more external light sources emitting light covering the total wavelength range.

Fig. 1a

Fig. 1b

**Fig. 2**

**Fig. 3**

**Fig. 4**

**Fig. 5**

Fig. 6

EP 1 942 321 A1

**Fig. 7**

*Fig. 8*

**Fig. 9**

EP 1 942 321 A1

*Fig. 10*

**European Patent Office**

**EUROPEAN SEARCH REPORT**

Application Number

EP 07 38 8001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/084238 A (RIO GRANDE MEDICAL TECHNOLOGIE [US]) 24 October 2002 (2002-10-24) * page 17, line 17 - line 26; figure 10 * ----- | 1-19 | INV. G01J3/02 G01J3/12 G02B6/02 |
| D,A | US 2005/169590 A1 (ALKESKJOLD THOMAS T [DK]) 4 August 2005 (2005-08-04) * the whole document * ----- | 1-19 | |

TECHNICAL FIELDS SEARCHED (IPC)

G01J
G02B

The present search report has been drawn up for all claims

| Place of search | Date of completion of the search | Examiner |
|---|---|---|
| Munich | 16 April 2007 | Rödig, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 38 8001

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2007

| Patent document cited in search report | | Publication date | Patent family member(s) | | Publication date |
|---|---|---|---|---|---|
| WO 02084238 | A | 24-10-2002 | US | 2002171834 A1 | 21-11-2002 |
| US 2005169590 | A1 | 04-08-2005 | NONE | | |

EPO FORM P0459

For more details about this annex : see Official Journal of the European Patent Office, No. 12/82

**EP 1 942 321 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050169590 A

- EP 05388110 A